Europäisches Patentamt

European Patent Office

Office européen des brevets

(19)

(11) Publication number: **0 361 367**
**A2**

(12) # EUROPEAN PATENT APPLICATION

(21) Application number: 89117687.7

(22) Date of filing: 25.09.89

(51) Int. Cl.5 **C08K 7/20 , C08K 7/14 ,**
**C08L 77/00 , C08L 81/02 ,**
**C08L 67/02 , F02F 1/00**

(30) Priority: 26.09.88 JP 238977/88

(43) Date of publication of application:
**04.04.90 Bulletin 90/14**

(84) Designated Contracting States:
**DE FR GB**

(71) Applicant: **ASAHI GLASS COMPANY LTD.**
**No. 1-2, Marunouchi 2-chome**
**Chiyoda-ku, Tokyo(JP)**

Applicant: **Toyo Boseki Kabushiki Kaisha**
**2-8, Dojimahama 2-chome Kita-ku**
**Osaka-shi, Osaka-fu(JP)**

(72) Inventor: **Take, Katsuo**
**1-6-2-101, Komatsukita-machi**
**Nishinomiya-shi Hyogo-ken(JP)**
Inventor: **Funaki, Masahiko**
**2-5-57, Matsugaoka**
**Chigasaki-shi Kanagawa-ken(JP)**
Inventor: **Arai, Shigeharu**
**Minamishiraoka 3-28-5 Shiraoka-machi**
**Minamisaitama-gun Saitama-ken(JP)**

(74) Representative: **Wächtershäuser, Günter, Dr.**
**Tal 29**
**D-8000 München 2(DE)**

(54) **Thermoplastic resin composition.**

(57) A thermoplastic resin composition for molding a cylinder head cover of an internal combustion engine, which consists essentially of from 5 to 40% by weight of glass balloons, from 5 to 55% by weight of a reinforcing fiber and from 40 to 95% by weight of a thermoplastic resin.

EP 0 361 367 A2

# THERMOPLASTIC RESIN COMPOSITION

The present invention relates to a thermoplastic resin composition for molding a cylinder head cover of an internal combustion engine. having an improved specific modulus and excellent mechanical properties and heat resistance.

A glass fiber reinforced polyamide resin or polyester resin is used for e.g. a cylinder head cover by virtue of excellent properties such as heat resistance. mechanical strength and productivity. On the other hand, various studies are being made to solve problems involved in preventing warpage or in reducing the weight. For example, it is known to obtain a molded product having little warpage by subjecting a glass-milled fiber reinforced polyamide resin to low foaming injection molding (Japanese Unexamined Patent Publication No. 188433,1986). From the viewpoint of reducing the weight. it is known to use silus balloons as a filler (Japanese Unexamined Patent Publication No. 121851 1978 and No. 136057 1978) or to use fly ash (Japanese Unexamined Patent Publication No. 6109,1988). However, as a substitute for a metal. it is required that the ratio of the modulus of elasticity to the specific gravity of the material (specifc modulus) and the mechanical strength and heat resistance are required to be large. Such requirements have not yet adequately been satisfied. Further, the silus balloons and fly ashes have a problem that they are susceptible to rupture during the molding operation as compared with glass balloons. Namely, as a result of extensive researches to solve the above problems. the present inventors have discovered a blend composition having far superior propeties by combining glass balloons with a reinforcing fiber and a thermoplastic resin. The present invention has been accomplished on the basis of this discovery.

The materials obtained by the above-mentioned conventional methods are inadequate in the weight reduction i.e. in the reduction of the specific gravity and in the improvement of the specifc modulus. because silus balloons or fly ashes employed as fillers for the weight reduction tend to break during the melt kneading with the thermoplastic resin by an extruder and during the pelletizing, to lose their effectiveness. As a substitute for a metal, the specific modulus ($3_\lambda$ flexural modulus,specific gravity) is required to be larger than 7.1 which is the specific modulus of aluminum.

The present invention is intended to satisfy these requirements and to accomplish a high level of balance of physical properties such as a high specific modulus and high weld strength while maintanining very high heat resistance. by melt mixing specific amounts of a reinforcing fiber and glass balloons to a specific thermoplastic resin.

Namely. the present invention provides a thermoplastic resin composition for molding a cylinder head cover of an internal combustion engine. which consists essentially of from 5 to 40% by weight of glass balloons. from 5 to 55% by weight of a reinforcing fiber and from 40 to 95% by weight of a thermoplastic resin.

Now. the present invention will be described in detail with reference to the preferred embodiments.

The present invention provides a thermoplastic resin composition for molding a cylinder head cover of an internal combustion engine, which consists essentially of (A) from 40 to 95% by weight of a polyamide resin. a polyphenylene sulfide resin or a thermoplastic polyester resin. (B) from 5 to 40% by weight of glass balloons and (C) from 5 to 55% by weight of a reinforcing fiber. The preferred proportions of components (A). (B) and (C) are from 45 to 90% by weight. from 10 to 35% by weight and from 10 to 40% by weight. respectively. If the proportion of the glass balloons as component (B) is too low. the density will be high and no adequate weight reduction can be attained. and if the proportion is too high. the strength tends to deteriorate. If the proportion of the reinforcing fiber as component (C) is too low. the strength will be inadequate. and if the proportion is too high, the breakage of the glass balloons will be facilitated. such being undesirable. The polyamide resin to be used in the present invention is a thermoplastic resin obtained by the polymerization of a diamine with a dicarboxylic acid or with a lactam. Specifically, it may be nylon-6, nylon-66, nylon-46, nylon-12, nylon-6,10, or a copolymer or blend composition thereof. The thermoplastic polyester resin is a thermoplastic resin obtained by the condensation polymerization of a dicarboxylic acid with a diol. Specific examples include polyethylene terephthalate and polybutylene terephthalate. The glass balloons are balloons of glass i.e. fine spherical hollow particles of glass prepared by expanding glass particles with a foaming agent and have an average particle size of from 5 to 200 $\mu$m and an average particle density of at least 0.4 g/cm$^3$, preferably at least 0.6 g.cm$^3$. The reinforcing fiber includes glass fiber, carbon fiber. aramide fiber and various ceramic fibers. Glass fiber is particularly preferred from the viewpoint of the cost and properties. The glass fiber usually has an average diameter of from 3 to 25 $\mu$m, preferably from 6 to 13 $\mu$m. If the average diameter is large, the improvement of the mechanical properties of the resulting composition tends to be less, such being undesirable. On the other hand, if the average diameter is small, such is economically disadvantageous. The thermoplastic resin composition of the present invention can be melt-kneaded by e.g. an extruder to form pellets, which are then molded by e.g. injection molding into a cylinder head cover for an internal combustion engine. To the composition of the present invention, various additives including an antioxidant, a nucleating agent, various colorants, a releasing agent, a flame retardant and an antistatic agent, may be incorporated as additional components in addition to the above-mentioned components (A), (B) and (C), as the case requires. The surface of the glass balloons may be non-treated, but may preferably be pretreated with a coupling agent of silane, titanium or chromium type. In the case of non-treated glass balloons, such a coupling agent may be incorporated to the blend composition in the same manner as the above-mentioned additional components.

Now, the present invention will be described in further detail with reference to Examples. However, it should be understood that the present invention is by no means restricted by such specific Examples.


EXAMPLES 1 TO 4 AND COMPARATIVE EXAMPLES 1 TO 4

Nylon-6 (NYLON T-802, manufactured by Toyobo Co., Ltd.), glass balloons (GLASS BUBBLES SSX, manufactured by 3M Company, average particle density: 0.6, treated with $\gamma$-aminopropyl-triethoxysilane 1%) and a glass fiber (Chopped strand CSO3JAFT 2, manufactured by Asahi Fiber Glass Company Ltd., average particle diameter: 10 $\mu$m) were charged into an extruder and melt-kneaded at a temperature of from 240 to 260°C to obtain pellets. Then, the pellets were molded into test pieces for evaluation by an injection molding machine. The moldability was excellent i.e. it was possible to conduct the molding under the same conditions as for a usual glass fiber reinforced polyamide resin. The results are shown in Table 1.

As is evident from Table 1, the compositions of Examples 1 to 4 according to the present invention have excellent properties. Namely, the heat distortion temperature (HDT) as an index for heat resistance is improved to a high temperature level which can not be attained by glass balloons only, and the specific modulus is far superior to that of aluminum. Further, the weld strength is superior to the Comparative Examples.

Table 1

| | | Examples | | | | Comparative Examples | | | |
|---|---|---|---|---|---|---|---|---|---|
| | | 1 | 2 | 3 | 4 | 1 | 2 | 3 | 4 |
| Nylon-6 | wt% | 60 | 50 | 50 | 70 | 70 | 80 | 70 | 60 |
| Glass balloons | wt% | 20 | 20 | 30 | 22.5 | - | 20 | 30 | 40 |
| Glass fiber | wt% | 20 | 30 | 20 | 7.5 | 30 | - | - | - |
| Flexural strength | kg/mm² | 13.2 | 24.8 | 20.4 | 10.5 | 25.6 | 8.3 | 6.0 | 5.4 |
| Flexural modulus | kg/mm² | 590 | 941 | 776 | 434 | 820 | 312 | 360 | 414 |
| Izod impact strength (non-notched) | kg-cm/cm² | 60 | 69 | 50 | 45 | 86 | 19 | 15 | 11 |
| Specific gravity | | 1.08 | 1.23 | 1.11 | 1.05 | 1.35 | 1.02 | 0.92 | 0.99 |
| Specific modulus | | 7.8 | 8.0 | 8.3 | 7.2 | 6.9 | 6.6 | 7.7 | 7.5 |
| HDT (18.6 kg/cm²) | °C | 195 | 200 | 200 | 196 | 195 | 57 | 70 | 97 |
| Weld strength | kg/mm² | - | 8.0 | 8.6 | - | 6.0 | - | - | - |


EXAMPLE 5

The compression creep characteristics of the test pieces of Example 2 were measured. The test pieces were compressed under a pressure of 200 kg/cm² in an atmosphere of 100°C and the compression change rate after 100 hours was measured and found to be 2.8%. In the same manner, the compression change rates of glass fiber reinforced nylon-6 (glass content: 30 wt%) and nylon-66 (glass content: 45 wt%) were measured for the purpose of comparison and found to be 5.3% and 4.4%, respectively.

3

EXAMPLE 6

The evaluation was conducted in the same manner as in Examples 1 to 4 except that a polyphenylene sulfide resin was used instead of nylon-6 in Examples 1 to 4. The results are shown in Table 2. The moldability of pellets was excellent. For the purpose of comparison, similar evaluation was conducted with respect to the systems wherein no glass balloons were employed (Comparative Examples 5 to 7). The results are shown in Table 2.

Table 2

|  | Example 6 | Comparative Examples | | |
|---|---|---|---|---|
|  |  | 5 | 6 | 7 |
| Polyphenylene sulfide resin (wt%) | 60 | 60 | - | - |
| Polybutylene phthalate resin (wt%) | - | - | 60 | 60 |
| Glass balloons (wt%) | 20 | - | - | - |
| Glass fiber (wt%) | 20 | 40 | 20 | 20 |
| Silus balloons (wt%) | - | - | 20 | - |
| Fly ash (wt%) | - | - | - | 20 |
| Flexural strength (kg.mm$^2$) | 15.5 | 20.9 | 14.8 | 15.7 |
| Flexural modulus (kg.mm$^2$) | 1120 | 1522 | 970 | 1055 |
| Izod impact strength (non-notched) (kg-cm.cm$^2$) | 27 | 35 | - | - |
| Specific gravity (-) | 1.31 | 1.66 | 1.57 | 1.48 |
| Specific modulus (-) | 7.9 | 6.9 | 6.3 | 6.9 |
| HDT (18.6 kg.cm$^2$) °C | 260 | 260 | 195 | 195 |
| Weld strength (kg.mm$^2$) | 4.5 | 3.7 | - | - |

EXAMPLES 7 AND 8 AND COMPARATIVE EXAMPLES 8 AND 9

The evaluation was conducted in the same manner as in Examples 1 to 4 except that a polyethylene terephthalate resin (RE 500, manufactured by Toyobo Co., Ltd.) was used instead of nylon-6 in Examples 1 to 4, and the melt kneading was conducted at a temperature of from 270 to 290°C to form pellets. The results are shown in Table 3. The moldability of pellets was excellent. For the purpose of comparison, similar evaluation was conducted with respect to a system wherein no glass balloons were employed (Comparative Example 8) and a system wherein no glass fiber was employed (Comparative Example 9). The results are shown in Table 3.

Table 3

| | | Examples | | Comparative Examples | |
|---|---|---|---|---|---|
| | | 7 | 8 | 8 | 9 |
| PET | wt% | 50 | 50 | 70 | 70 |
| Glass balloons | wt% | 30 | 20 | - | 30 |
| Glass fiber | wt% | 20 | 30 | 30 | - |
| Flexural strength | kg.mm$^2$ | 15.9 | 19.6 | 19.8 | 6.8 |
| Flexural modulus | kg.mm$^2$ | 918 | 1121 | 960 | 446 |
| Izod impact strength (non-notched) | kg-cm.cm$^2$ | 24 | 33 | 39 | 9 |
| Specific gravity | | 1.26 | 1.38 | 1.58 | 1.12 |
| Specific modulus | | 7.7 | 7.5 | 6.2 | 6.8 |
| HDT (18.6 kg.cm$^2$) | °C | 225 | 230 | 220 | 105 |
| Weld strength | kg.mm$^2$ | 6.7 | 6.5 | 5.7 | - |

The composition of the present invention exhibits excellent surface appearance, moldability, mechanical properties, heat resistance and a high specific modulus which has not been attained before. Further, the compression creep characteristics and the weld strength are thereby remarkably improved. Thus, the present invention provides a thermoplastic resin composition very useful as automobile parts where a high level of quality is required, particularly as a material for a cylinder head cover. The glass balloons in the composition of the present invention are hardly breakable as compared with silus ballons or fly ash, even when melt-kneaded by an extruder, and there will be no substantial reduction of the weight reducing effects.

## Claims

1. A thermoplastic resin composition for molding a cylinder head cover of an internal combustion engine, which consists essentially of from 5 to 40% by weight of glass balloons, from 5 to 55% by weight of a reinforcing fiber and from 40 to 95% by weight of a thermoplastic resin.

2. The thermoplastic resin composition according to Claim 1, wherein the glass balloons have an average particle size of from 5 to 200 μm.

3. The thermoplastic resin composition according to Claim 1, wherein the glass balloons are surface-treated with a coupling agent.

4. The thermoplastic resin composition according to Claim 3, wherein the coupling agent is a silane, titanium or chromiunm type coupling agent.

5. The thermoplastic resin composition according to Claim 1, wherein the reinforcing fiber is a glass fiber.

6. The thermoplastic resin composition according to Claim 5, wherein the glass fiber has an average diameter of from 3 to 25 μm.

7. The thermoplastic resin composition according to Claim 1, wherein the thermosplastic resin is a polyamide resin, a polyphenylene sulfide resin or a thermoplastic polyester resin.

8. The thermoplastic resin composition according to Claim 1, which is in the form of pellets.

9. The thermoplastic resin composition according to Claim 8, which is in the form of pellets prepared by melting and kneading the thermoplastic resin composition by an extruder.

10. A cylinder head cover of an internal combustion engine made of a thermoplastic resin molding composition consisting essentially of from 5 to 40% by weight of glass balloons, from 5 to 55% by weight of a reinforcing fiber and from 40 to 95% by weight of a thermoplastic resin.

11. The cylinder head cover according to Claim 10, which is prepared by injection molding the thermoplastic resin molding composition.